# EUROPEAN PATENT SPECIFICATION

(11) **EP 2 188 161 B1**
(45) Date of publication and mention of the grant of the patent: **21.09.2011**
(21) Application number: 08789450.7
(22) Date of filing: 25.07.2008
(51) Int. Cl.: B60S 1/40

(54) **A WINDSCREEN WIPER**
SCHEIBENWISCHER
ESSUIE-GLACE

(30) Priority: 30.07.2007 TR 200705260
(43) Date of publication of application: 26.05.2010
(73) Proprietor: Teklas Kaucuk Sanayi Ve Ticaret A.S., 41400, Kocaeli (TR)
(72) Inventor: BICICI, Banu, 41400 Kocaeli (TR); BOZKURTLU, Murat, 41400 Kocaeli (TR); SONMEZ, Bekir, 41400 Kocaeli (TR)
(74) Representative: Yavuzcan, Alev
(86) International application number: PCT/IB2008/052996
(87) International publication number: WO 2009/016569

(56) References cited:
- FR-A- 2 786 449
- GB-A- 2 322 069
- US-A1- 2005 028 312
- US-B1- 6 301 741

## Description

The present invention relates to a connector element which can rotate around an immovable pin over the carrier frame of a wiper blade via a partly open contoured pin hole provided on the body; which locks onto a wiper arm of which the end is given a hook-shaped form and therefore can be used in securing an articulated connection between a wiper blade and a wiper arm; and which can be employed with a hook-shaped wiper arm in four or more sizes with two different bending radii and at least two different widths by means of two cross members that attach the two side walls, said cross members having different curved exterior surfaces, wherein pin holes are also housed, and by way of extension protrusions that are connected onto each one of the side walls, said protrusions that can be stretched and locked thereon, shortening therefore the distance between the said walls.

Prior Art

A connector element, that can be fixed onto the hook-shaped end of a wiper arm and which produces articulated rotation around a pin hole provided over the wiper blade, is employed in order to enable the connection of a wiper arm onto a wiper blade. This system does not require the renewal of a fixed wiper arm during the life time , whereas the elastomer-based profile of a wiper blade necessitates periodical replacement due to wearing. The hook-shaped end of a wiper arm may vary in form from one vehicle to another due to various bending radii or widths. This is why a wiper blade is packed along with a number of connectors that can be used with different profiles of wiper arm ends. The user selects the connector that corresponds to the arm of the vehicle and throws away the others. However, this is a source of considerable waste. Therefore, it is advantageous to provide a connector that can be used with several arm ends

The Patent Application No US2002141814 describes a conventional connector that can be used with three different wiper arms, with two different bending radii and an alternative width. Onto said connector, two side walls are connected by way of a circular shaped central cross member comprising a hole through which a pin passes through. There is a second semi circular shaped stopping cross member provided in longitudinal direction at a certain distance to the central cross member, and a third stopping cross member at a certain distance thereto. Lengthwise external width of the connector remains constant, whereas internal width is narrowed by means of bearings that produce inward recesses over half of the lengthwise. In this embodiment, the wiper arm with a small radius is mounted onto the connector in such a way that the internal radius encircles the central cross member whereas the external surface of the said radius leans against the second stopping cross member; the wiper arm is then fixed by flexing and passing between the two connecting cross members provided over the connector on the extremity that faces the arm, said connecting cross members having different levels. The wiper arm with a large radius is mounted likewise so that the circular shaped internal surface encircles the second stopping cross member whereas the external surface leans against the third stopping cross member. The arm with a small radius but a different width can be mounted onto the connector lengthways from the other side.

The Patent Application No US6263538 also describes a connector that can be employed similarly with three different wiper arms comprising two different bending radii and an alternative width.

The Patent Application No US6301741 describes a connector comprising a mobile hub that enables the connector to rotate between two side walls around a pin hole, said side walls being in fixed position relative to one another. The distance between the two side walls may be different on the two halves along the lengthwise of the connector. As for the mobile hub, the structure is adapted for mounting a wiper arm with one bending radius on one side and another arm with two different bending radii on the other side. Although relatively adaptable for use with several wiper arms, this design has some disadvantages as far as convenience of production and cost increase because the connector in question is not in one-piece and required the mounting of the pieces together.

Besides the above, various other patent applications also describe, like document FR2786449 A1, which corresponds to the preamble of claim 1, connectors suitable for use with wiper arms comprising two bending radii or widths.

In order to reach the object of the present invention, a single-piece connector which can be used with four or more different arms with two different bending radii and at least two different widths and which is easy to fabricate in a single operation by way of plastic injection is described.
The invention is defined by the technical features set forth in claim 1. Additional features of the invention are disclosed in the dependent claims.

The invention shall be explained in detail with references to the annexed drawings in which :

Figure 1 shows the wiper system wherein the connector that is the subject of this invention is used.

Figure 2 shows an enlarged view of the zone of said wiper system where the connector is used.

Figure 3 shows a top and a sectional view of the connector that is the subject of this invention.

Figure 4 shows an isometric close view of the extension protrusions used on the connector that is the subject of this invention.

Figure 5 shows sectional views of said extension protrusions of the connector, in open and locked positions.

Figure 6 shows the manufactured form of the connector that is the subject of this invention and two embodiments wherein the extension protrusions are locked and pulled off the connector.

Figure 7 shows views of the connector mounted onto the wiper carrier frame in two different embodiments.

Figure 8 shows the hook-shaped wiper arm end with which the connector of this invention is used.

Figure 9 shows sectional views of the connector mounted onto wiper arms with large and small bending radii.

Figure 10 shows the embodiments in which the connector which is the subject of this invention is used with four different wiper arms.

Figure 11 shows an alternative embodiment wherein said connector is used with an arm comprising more than two widths.

Parts shown in the drawings are enumerated as follows:

10 Connector

11 Connector side wall

21 Connector major cross member

22 Connector minor cross member

23 Opening over the external surface of the connector cross member

24 Connector pin hole

25 Connector flexible arm

32 Connector top wall

41 Connector extension protrusion

42 Additional extension protrusion

200 Wiper blade

201 Wiper carrier frame

210 Curved external surface of the connector major cross member

220 Curved external surface of the connector minor cross member

221 Height of the connector major cross member

222 Height of the connector minor cross member

251 Connector tenon

252 Connector tenon

256 Free end of of the flexible arm

300 Wiper arm

301 Hook-shaped arm end

302 Wiper arm end upper leg

304 Wiper arm end lower leg

305 Wiper arm end slot

307 Bottom surface of the wiper arm end upper leg

308 Side surfaces of the wiper arm end

309 Curved interior surface of the wiper arm end

401 Immovable pin over the wiper carrier frame

412 Notches over the neck of the extension protrusion

413 Neck of the connector extension protrusion

414 Body of the connector extension protrusion

416 Ridge of the connector extension protrusion

417 Indents of the connector extension protrusion

421 Distance between connector side walls

422 Distance between side walls with extension protrusions locked

423 Distance between side walls with the additional extension protrusions

locked

425 Locking projections of the indents of the extension

protrusion

432 Extension protrusion housing over the connector side wall

445 Side walls of the extension protrusion housing

446 Recesses inside the extension protrusion housing

3011 Wiper arm end with a large bending radius

3012 Wiper arm end with a small bending radius

Detailed Description of the Invention

The present invention relates to a connector element (10) which can be used in vehicle windscreen wiper systems in order to maintain an articulated connection between a wiper blade (200) and a hook-shape ending wiper arm (300) to enable easy disconnection when desired, providing nevertheless a reliable and secure connection that avoids undesired detachment and which comprises a structure that makes the different embodiments to be compatible with more than one arm end designs.

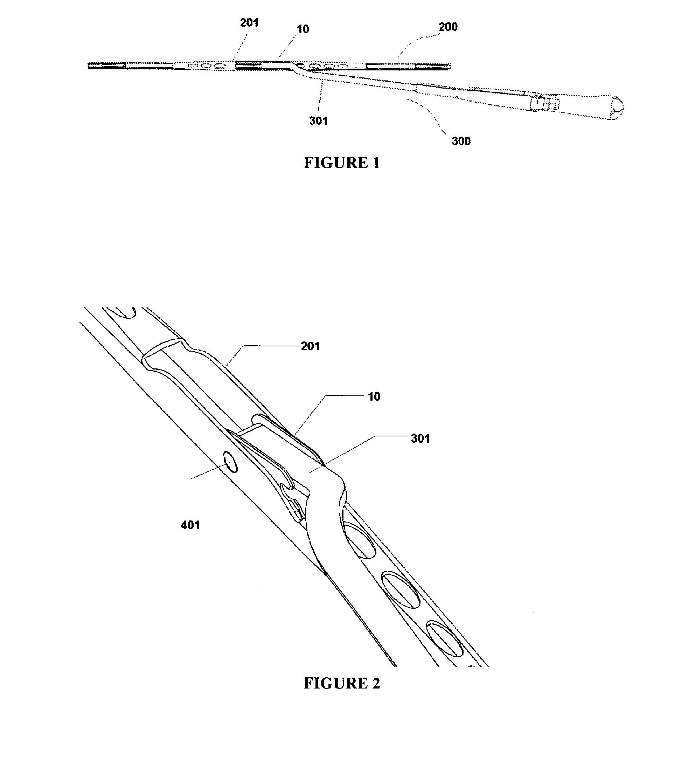

As shown in Figure 2, said connector element (10) is mounted onto an opening on the wiper carrier central frame (201) so as to sit inside and spin around a pin (401) driven into this frame. When the hook-shaped end (301) of the wiper arm (300) is locked onto the connector (10), the arm (300) is connected onto the wiper blade (200) at the same time as the connector (10), said connection enables rotation around the pin (401).

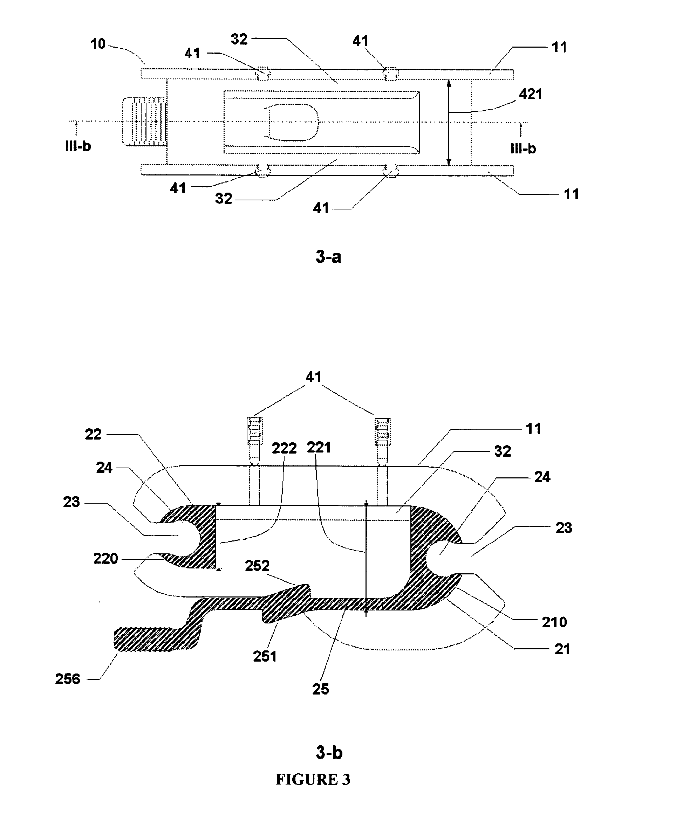

The connector (10) which is the subject of this invention comprises basically two side walls (11) parallel to one another and two cross members(21, 22) joining these walls. As seen in Figure 3-b, cross members (21, 22) are arranged longitudinally on the two sides of the connector (10). The external surfaces (210, 220) of the cross members (21,22) form a circular contour and each cross member (21, 22) is provided with an opening (23) over said circular external surfaces (210, 220). Continuing towards the centre of the cross member (21, 22), the said opening (23) runs out forming a circular housing (24) to end in a pin hole. In accordance with the wiper arm end (301) possessing two different bending radii (R), the heights (221, 222) of the two cross members are different. In accordance with the width (W) of the selected arm end (301), the distance (421) between the two side walls (11) of the connector (10) corresponds to the length required to surround the wiper arm end (301) from both side surfaces (308).

On the upper part of the connector, there is also a top wall (32) which joins the two cross members by the top (21, 22) and which is adjacent to the side walls (11). The said top wall (32) may be one-piece ranging between one side wall (11) and the other or, for production ease, shaped so as to leave an opening at the center.

A flexible arm (25) articulated on the lower part of the major cross member (21) extends along the connector. Tenons (251, 252) are provided over the top and bottom surfaces of the flexible arm (25) in such a way that said tenons make up a bulge.

The tenons (251, 252) have triangular cross section, the perpendicular walls of which face opposite directions.

The free end (256) of the flexible arm (25) has a serrated surface to facilitate easy handling.

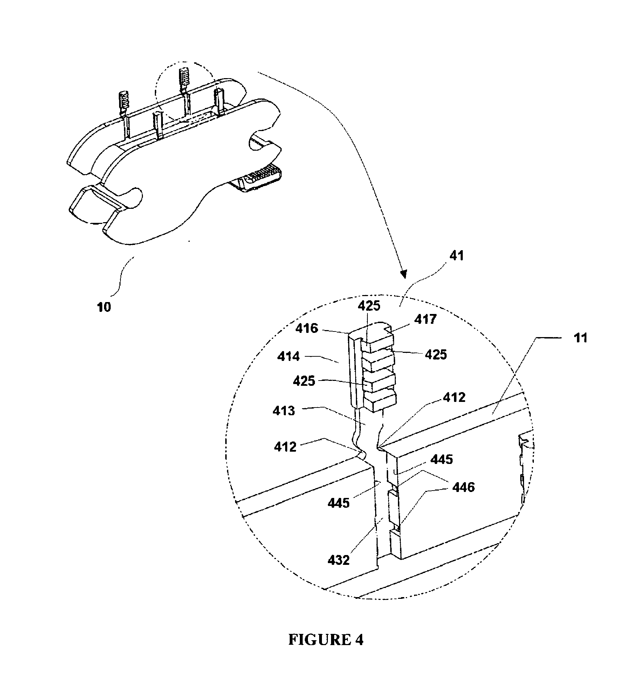

As shown in detail in Figure 4, upper parts of the connector side walls (11) are provided with extension protrusions (41) at least one, preferably two, on each wall (11) and arranged so as to stretch upwardly. These extension protrusions (41) are made up of a neck (413) and a rigid body (414) portion placed thereon. The neck (413) portion has smaller wall thickness to form a film zone for better flexion and at the conjuction area with the side walls (11), this neck (413) is considerably weakened by notches (412) provided on its both sides.

The body (414) of the extension protrusion (41) consists of a quadrangular sectioned ridge (416), preferably with exterior corners rounded up and of indents (417) ranging out from the ridge (416) towards the interior part of the connector, said indents forming a bulge and arranged at intervals. Locking projections (425) are provided over the side walls of the indents (417) in a manner to constitute triangular sectioned bulges. Locking projections (425) may be provided on both sides of each indent (417) or only on one side of each when arranged oppositely if indents align one under the other. Indents (417) may also be configured so as to constitute a single bulge instead of several bulges arranged at intervals along the body (414) of an extension protrusion (41).

Over the connector side wall (11), there is a housing (432) below the extension protrusion (41). The said housing (432) is long enough to enclose the body (414) of the extension protrusion (41) and deep enough for the indents (417) on the body (414) to fit inside. The two side walls (445) of the housing (432) contain recesses (446) wherein the locking projections (425) provided over the indents (417) of the extension protrusion (41) can be inserted and seated.

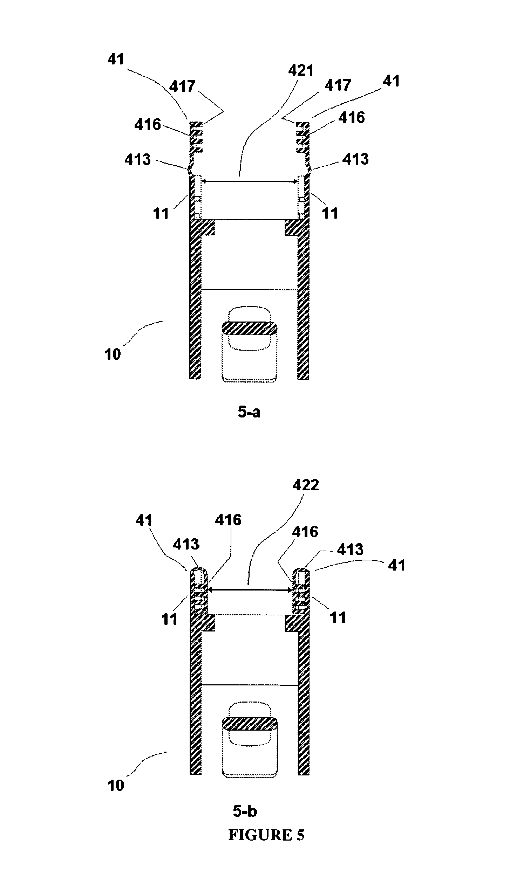

When the extension protrusion (41) is bent around the easily flexible neck (413) towards the interior and is fixed inside the housing (432) over the side wall (11) of the connector (10) through snap fitting method by use of the indents (417), the locking projections (425), and the recesses (446), the ridge (416) of the extension protrusion (41) develops an inward bulge on the connector (10) side wall. Distance (421) over the connector internal section while an extension protrusion (41) is at open position (Figure 5-a) can be shortened (422) by fixing the said extension protrusion (41) inside the housing (432) over the side wall (11) (Figure 5-b), and a wiper arm with two different bending radii (W1, W2) can be inserted inside one single connector (10) thanks to this particular feature.

Each side wall (11) is provided with at least one extension protrusion (41) and preferably two. The width and number of said protrusions may be augmented. Extension protrusions (41) on the opposite side walls (11) may be aligned or arranged in a way so as not to face each other.

In order to flex and lock extension protrusions (41) onto the connector (10) side wall (11), various versions of snap fitting connection method other than those as described above can be applied wherein locking projections (425) and recesses (446) are employed, as well as other similar locking systems that have not been mentioned above may ne used.

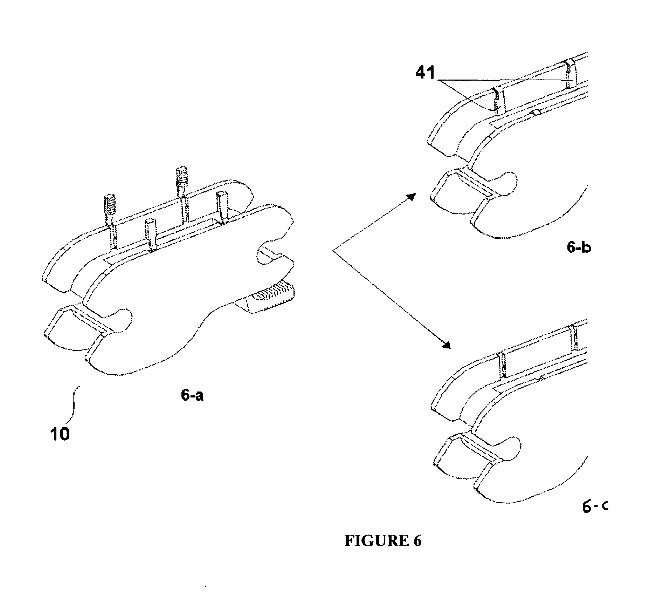

If it is not necessary to use an extension protrusion (41) in order to match the width of the selected wiper arm end (301), to avoid unpleasant configuration, said protrusion can be easily pulled out and detached manually around above mentioned neck area (413) which has been weakened by way of notches (412). When, however, extension protrusions (41) are used, the probability of detaching off the said weakened area (412) during assemblage onto the connector (10) side wall (11) or during functioning does not constitute any problem, because the said protrusion (41) has already been fixed by the body (414) onto the connector side wall (11) in an inseparable and immovable way. Figure 6 shows a connector (10) in manufactured form (6-a) together with two embodiments, one wherein the extension protrusions (41) are locked into place (6-b) and the other with protrusions (41) removed away from the connector (6-c).

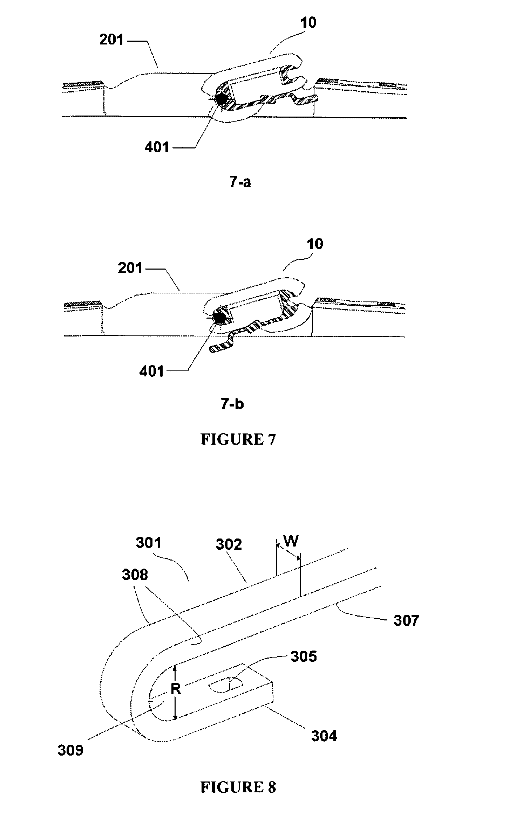

Figure 7 shows the connection of the connector (10) to a wiper blade (200) by mounting a pin hole (24), said pin hole being arranged on the same side of the connector that corresponds to the bending radius (R) of the selected wiper arm end (301), onto a pin (401) provided over the wiper carrier frame (201).

The hook-shaped wiper arm end (301) has a W width and an R bending radius and has a slot (305) on the lower leg (304) that serves locking purposes.

Use of extension protrusions is unnecessary when the selected wiper arm end (301) width (W) is a large one (W1). In order to avoid unpleasant configuration, the extension protrusions (41) can be pulled out and detached manually around the weakened area (412) where the said protrusions are connected to the connector side wall (11). If a wiper arm end (301) with a smaller width (W2) is used, then the connector interior width (421) can be shortened (422) through flexing inwardly these protrusions (41) around the flexible neck area (413) and fixing inside the housings (432) over the side walls(11).

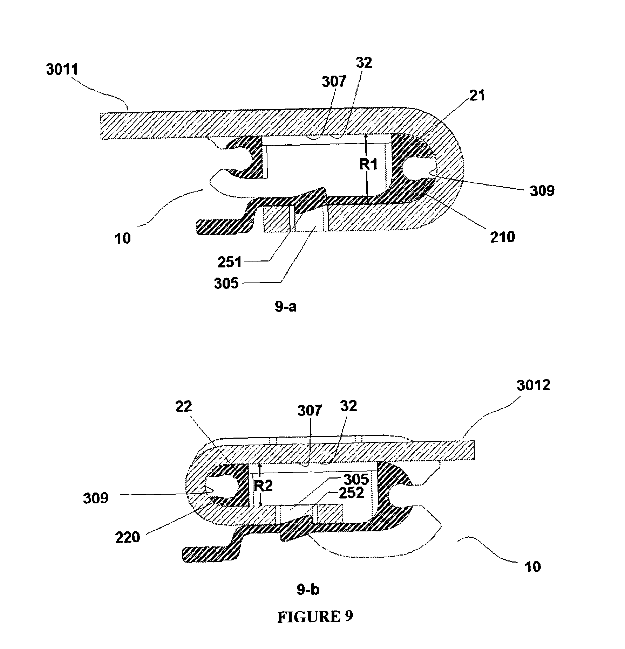

Figure 9-a shows the embodiment where a wiper arm with a large bending radius is mounted onto the connector. A wiper arm end (3011) possessing a large bending radius (R1) is fitted over the connector (10) in such a way that the circular interior surface (309) encircles the curved exterior surface (210) of the connector major cross member (21). At the same time, the interior surface (307) of the upper leg (302) of the hook-shaped wiper arm end (301) is seated over the connector top wall (32) while the tenon (251) at the bottom surface of the connector flexible arm (25) is inserted inside the slot (305) provided over the wiper arm lower leg (304), enabling the wiper arm (300) to lock onto the connector (10).

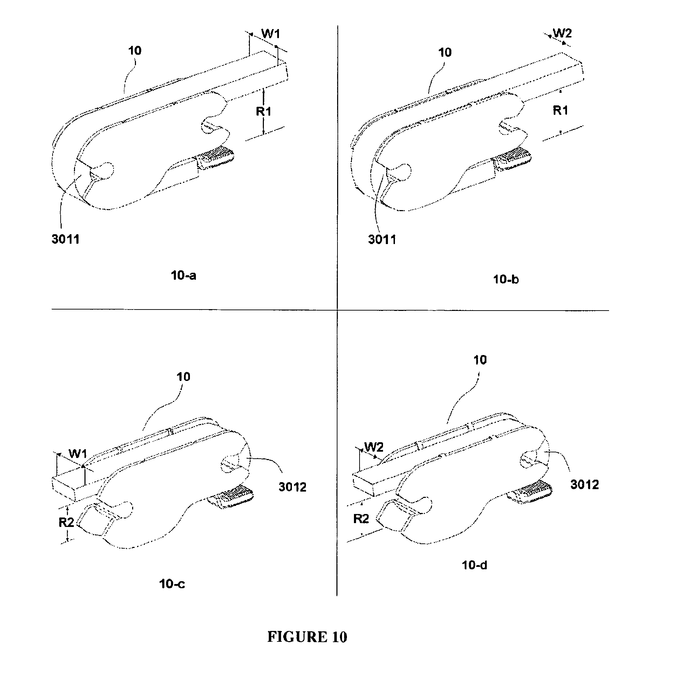

As shown in Figure 9-b, a wiper arm end (3012) possessing a small bending radius (R2) is mounted onto the connector in such a way that the circular interior surface (309) encircles the curved exterior surface (220) of the connector minor cross member (22). At the same time, the interior surface (307) of the upper leg (302) of the hook-shaped wiper arm end (301) is seated over the connector top wall (32) while the tenon (252) at the top surface of the connector flexible arm (25) is inserted inside the slot (305) provided over the wiper arm lower leg (304), enabling the wiper arm (300) to lock onto the connector (10). Figure 10 shows four different wiper arms attached onto the connector (10) with large and small bending radii and large and small widths.

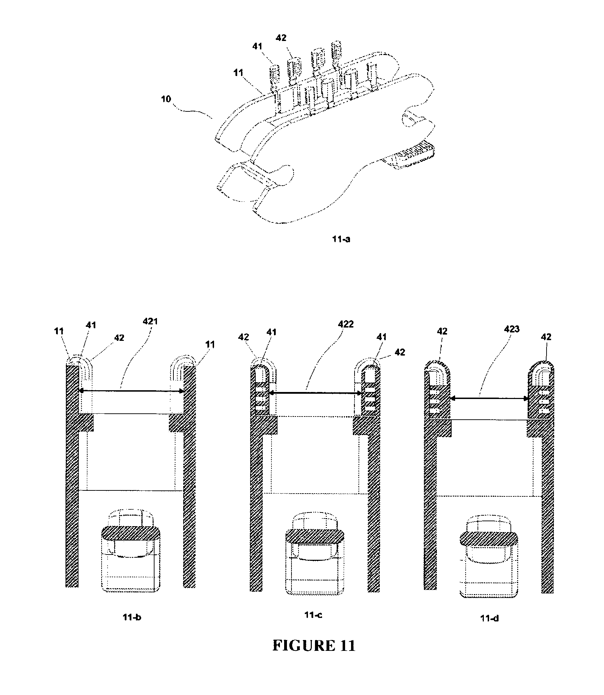

In an alternative embodiment of the invention, extension protrusions (41, 42) having various thickness can be used. Said embodiment thus provides a bearing for an arm end (301) possessing 3 different widths (W), said widths corresponding to the distance (421) between the two side walls (11) if extension protrusions are not employed, distance (422) between the first group extension protrusions (41), and the distance (423) between the second group extension protrusions (42). This number can be increased if need be. Figure 11 shows an embodiment of the same method with 3 different widths.

## Claims

1. A connector element (10) which can be used in vehicle windscreen wiper systems with a wiper arm (300) in four or more sizes with two different bending radii and at least two different widths and provided with a hook-shaped end (301); which can be mounted onto a wiper blade (200) in a way that enables rotating around a pin (401) by means of a partly open-contoured pin hole provided on the body; which, by locking onto a wiper arm end (301), is used to provide an articulated connection between the wiper arm (300) and the wiper blade (200) said connector element (10) further comprising
two cross members (21, 22) that attach the two side walls (11) and are provided with dissimilar curved exterior surfaces (210, 220) so wiper arm ends (301) of two different bending radii (R) can be mounted, said connector element being **characterized by** extension protrusions (41) which are joint onto each side wall (11) and which can shorten (422) the distance (421) between the two walls (11) through flexing and locking onto the said wall (11) so that wiper arm ends (301) of at least two, preferably more different widths (W) can be mounted.

2. A connector element as in Claim 1, wherein the cross members (21, 22) are arranged lengthwise over the connector element (10) close to the two ends, each cross member comprising an opening (23) over the aforementioned curved exterior surface (210, 220) that faces outwardly, said opening continuing up to the centre of the cross member (21, 22) and ending in a circular housing to constitute a pin hole (24), and wherein the heights (221, 222) of the cross members are dissimilar in accordance with a wiper arm that has two different bending radii.

3. A connector element as in Claim 1, wherein a top wall (32) which is adjacent to both side walls (11) is provided to join the said two cross members (21, 22) at their top parts.

4. A connector element as in Claim 1, wherein the larger sized one (21) of the two cross members (21, 22) comprises a flexible arm (25) connected by the lower part, said flexible arm extending longitudinally on the cross member and over which bulge-shaped tenons (251, 252) are provided.

5. A connector element as in Claim 4, wherein the said tenons (251, 252) are arranged on opposite surfaces of the said flexible arm (25) and have triangular cross section, the perpendicular walls of which face opposite directions.

6. A connector element as in Claim 5, which can be locked onto a wiper arm end (3011) that has a large bending radius by inserting from above the said tenon (251) on the said flexible arm (25) inside a slot (305) provided on the wiper arm lower leg (304), provided that the circular interior surface (309) of the arm end (3011) is mounted so as to encircle the circular exterior surface (210) of the major cross member (21) and that the bottom surface (307) of the upper leg (302) of the arm end is seated onto the top wall (32).

7. A connector element as in Claims 5, which can be locked onto a wiper arm end (3012) that has a small bending radius by inserting from below the said tenon (252) own the said flexible arm (25) inside a slot (305) provided on the wiper arm lower leg (304), provided that the circular interior surface (309) of the arm end (3012) is mounted so as to encircle the circular exterior surface (220) of the minor cross member (22) and that the bottom surface (307) of the upper leg (302) of the arm end is seated onto the top wall (32).

8. A connector element as in Claim 1, wherein the said extension protrusions (41) are provided on the upper part of the side walls (11), at least one on each wall (11) and arranged so as to stretch upwardly.

9. A connector element as in Claim 1, which can be used with an arm end (301) having three or more different widths by using extension protrusions (41, 42) of more than one thickness.

10. A connector element as in Claim 1, wherein the said extension protrusions (41) comprise, a neck (413) and a body (414) portion, where the neck (413) has smaller wall thickness to form a film zone for better flexion and at the conjuction area with the side walls (11), it is considerably weakened by notches (412) provided on its both sides.

11. A connector element as in Claim 10, wherein the body (414) of the extension protrusion (41) comprises a quadrangular sectioned ridge (416), preferably with exterior corners rounded up and indents (417) stretching out from the said ridge (416) in intervals forming bulges inwardly.

12. A connector element as in Claim 11, wherein the side walls of the said indents (417) are provided with locking projections (425) constituting triangular cross sectioned bulges.

13. A connector element as in Claims 11 and 12, wherein the said Indents (417) are arranged so as to form a one-piece bulge stretching out from the said ridge (416) inwardly.

14. A connector element as in Claim 1, which comprises on the side walls (11) a housing (432) provided below the said extension protrusions (41), wherein the extension protrusions (41) are inserted and locked.

15. A connector element as in Claim 1, wherein the said extension protrusions can be detached manually or with a tool and removed away from the area where the said extension protrusion (41) is connected to the side wall (11).

16. A connector element as in Claim 1 to 15, which can be made of plastic material through single injection process.

## Patentansprüche

1. Verbindungselement (10), das an Fahrzeugscheibenwischersystemen mit einem Scheibenwischerarm (300) in vier oder mehr Größen mit zwei verschiedenen Biegeradien und wenigstens zwei verschiedenen Breiten benutzt werden kann, und das ein hakenförmiges Ende (301) aufweist; das derart an ein Wischerblatt (200) montiert werden kann, dass es sich mittels einer Stiftöffnung, die eine teilweise offene Kontur aufweist und am Grundkörper vorgesehen ist, um einen Stift (401) drehen kann; das durch Arretieren an einem Wischerarmende (301) dazu benutzt wird, eine Gelenkverbindung zwischen dem Wischerarm (300) und dem Wischerblatt (200) bereitzustellen;
wobei das Verbindungselement durch zwei Querträger (21, 22) **gekennzeichnet** ist, die die zwei Seitenwände (11) befestigen und die mit ungleichen gekrümmten Außenflächen (210, 220) versehen sind, derart, dass Wischerarmenden (301) mit zwei verschiedenen Biegeradien (R) montiert werden können, wobei das Verbindungselement (10) ferner Verlängerungsvorsprünge (41) umfasst, die an jeder Seitenwand (11) verbunden sind und die den Abstand (421) zwischen den zwei Wänden (11) durch Biegen und Arretieren an der Wand (11) verkürzen können (422), derart, dass Wischerarmenden (301) in mindestens zwei und vorzugsweise mehr Breiten (W) montiert werden können.

2. Verbindungselement nach Anspruch 1, wobei die Querträger (21, 22) nahe den zwei Enden längs am Verbindungselement (10) angeordnet sind, wobei jeder Querträger eine Öffnung (23) über der gekrümmten Außenfläche (210, 220) aufweist, die nach außen gewandt ist, wobei die Öffnung sich weiter bis zur Mitte des Querträgers (21, 22) erstreckt und in einer kreisförmigen Aufnahme endet, um auf diese Weise eine Stiftöffnung (24) zu bilden, und wobei die Höhen (221, 222) der Querträger entsprechend einem Wischerarm, der zwei verschiedene Biegeradien aufweist, ungleich sind.

3. Verbindungselement nach Anspruch 1, wobei eine obere Wand (32), die zu den beiden Seitenwänden (11) benachbart ist, vorgesehen ist, um die zwei Querträger (21, 22) an ihren oberen Abschnitten miteinander zu verbinden.

4. Verbindungselement nach Anspruch 1, wobei der größere (21) der zwei Querträger (21, 22) einen flexiblen Arm (25) umfasst, der am unteren Abschnitt verbunden ist, wobei sich der flexible Arm längs am Querträger erstreckt und wulstförmige Zapfen (251, 252) daran vorgesehen sind.

5. Verbindungselement nach Anspruch 4, wobei die Zapfen (251, 252) an gegenüberliegenden Flächen des flexiblen Arms (25) angeordnet sind und einen dreieckigen Querschnitt aufweisen, wobei ihre senkrechten Wände in entgegengesetzte Richtungen weisen.

6. Verbindungselement nach Anspruch 5, das an einem Wischerarmende (3011) arretiert werden kann, welches einen großen Biegeradius aufweist, indem der Zapfen (251) am flexiblen Arm (25) von oben in einen Schlitz (305), der am unteren Abschnitt (304) des Wischerarms vorgesehen ist, eingeführt wird, wobei vorgesehen ist, dass die kreisförmige Innenfläche (309) des Armendes (3011) derart montiert ist, dass sie die kreisförmige Außenfläche (210) des großen Querträgers (21) umgibt und dass die Unterfläche (307) des oberen Abschnitts (302) des Armendes an der oberen Wand (32) sitzt.

7. Verbindungselement nach Anspruch 5, das an einem Wischerarmende (3012) arretiert werden kann, welches einen kleinen Biegeradius aufweist, indem der Zapfen (252) am flexiblen Arm (25) von unten in einen Schlitz (305), der am unteren Abschnitt (304) des Wischerarms vorgesehen ist, eingeführt wird, wobei vorgesehen ist, dass die kreisförmige Innenfläche (309) des Armendes (3012) derart montiert ist, dass sie die kreisförmige Außenfläche (220) des kleinen Querträgers (22) umgibt und dass die Unterfläche (307) des oberen Abschnitts (302) des Armendes an der oberen Wand (32) sitzt.

8. Verbindungselement nach Anspruch 1, wobei die Verlängerungsvorsprünge (41) am oberen Teil der Seitenwände (11) vorgesehen sind, und zwar jeweils einer an jeder Wand (11), und nach oben gestreckt angeordnet sind.

9. Verbindungselement nach Anspruch 1, das mit einem Armende (301) mit drei oder mehr verschiedenen Breiten benutzt werden kann, indem Verlängerungsvorsprünge (41, 42) in mehr als einer Dicke verwendet werden.

10. Verbindungselement nach Anspruch 1, wobei die Verlängerungsvorsprünge (41) einen Halsabschnitt (413) und einen Körperabschnitt (414) umfassen, wobei der Hals (413) eine geringere Wanddicke aufweist, um eine Folienzone zum besserem Biegen zu bilden, und im Verbindungsbereich mit den Seitenwänden (11) durch Kerben (412) an beiden Seiten stark geschwächt ist.

11. Verbindungselement nach Anspruch 10, wobei der Körperabschnitt (414) des Verlängerungsvorsprungs (41) einen Grat mit quadratischem Querschnitt (416) aufweist, der vorzugsweise abgerundete Außenecken und Einkerbungen (417) aufweist, die sich in Intervallen von dem Grat (416) erstrecken und nach innen ragende Wülste bilden.

12. Verbindungselement nach Anspruch 11, wobei die Seitenwände der Einkerbungen (417) mit Arretiervorsprüngen (425) versehen sind, die Wülste mit dreieckigem Querschnitt bilden.

13. Verbindungselement nach Anspruch 11 und 12, wobei die Einkerbungen (417) derart angeordnet sind, dass sie einen einstückigen Wulst bilden, der sich von dem Grat (416) nach innen erstreckt.

14. Verbindungselement nach Anspruch 1, das an den Seitenwänden (11) eine Aufnahme (432) umfasst, die unter den Verlängerungsvorsprüngen (41) vorgesehen ist, und in die die Verlängerungsvorsprünge (41) eingeführt und arretiert werden.

15. Verbindungselement nach Anspruch 1, wobei die Verlängerungsvorsprünge sich manuell oder mit einem Werkzeug lösen lassen und aus dem Bereich entfernen lassen, an dem der Verlängerungsvorsprung (41) mit der Seitenwand (11) verbunden ist.

16. Verbindungselement nach den Ansprüchen 1 bis 15, das durch einen einzelnen Spritzvorgang aus Kunststoffmaterial hergestellt werden kann.

## Revendications

1. Un élément connecteur (10) utilisable dans les systèmes d'essuie-glace de véhicule automobile avec un bras d'essuyage (300) en quatre ou plusieurs tailles à deux rayons de courbure différents et en au moins deux largeurs différentes et pourvu d'une extrémité en forme de crochet (301) ; qui peut être monté sur un balai d'essuie-glace (200) d'une manière qui lui permet de tourner autour d'un axe (401) au moyen d'un trou d'axe dont la périphérie est partiellement ouverte sur le corps ; qui, en venant en prise avec une extrémité de bras d'essuyage (301), est utilisé pour permettre une liaison articulée entre le bras d'essuyage (300) et le balai d'essuie-glace (200) ;
ledit élément connecteur étant **caractérisé par** deux traverses (21, 22) qui attachent les deux parois latérales (11) et sont pourvus de différentes courbes surfaces extérieures (210, 220) de telle sorte que les extrémités de bras d'essuyage (301) à deux rayons de courbure différents (R) peuvent être montées, ledit élément connecteur (10) comprenant en outre des saillies de prolongement (41) qui sont fixées sur chaque paroi latérale (11) et qui peut raccourcir (422) la distance (421) entre les deux parois (11) en fléchant et venant en prise sur ladite paroi (11) de telle sorte que les extrémités de bras d'essuyage (301) en au moins deux, préférablement plusieurs différentes largeurs (W) peuvent être montées.

2. Un élément connecteur selon la Revendication 1, dans lequel les traverses (21, 22) sont disposées longitudinalement sur l'élément connecteur (10) à proximité des deux extrémités, chaque traverse comprenant une ouverture (23) sur ladite surface extérieure courbe (210, 220) qui fait face vers l'extérieur, ladite ouverture continuant jusqu'au centre de la traverse (21, 22) et se terminant dans un logement circulaire pour constituer un trou d'axe (24), et dans lequel les hauteurs (221, 222) des traverses sont différentes conformément à un bras d'essuyage qui a deux rayons de courbure différents.

3. Un élément connecteur selon la Revendication 1, dans lequel une paroi supérieure (32) qui est adjacent aux deux parois latérales (11) est permis d'attacher lesdites traverses (21, 22) à leur partie supérieure.

4. Un élément connecteur selon la Revendication 1, dans lequel l'une de plus grande taille (21) de deux traverses (21, 22) comprend un bras flexible (25) relié à la partie inférieure, ledit bras flexible s'étendant longitudinalement sur la traverse et sur lequel des tenons en forme de renflement (251, 252) sont disposés.

5. Un élément connecteur selon la Revendication 4, dans lequel lesdits tenons (251, 252) sont disposés sur les faces opposes dudit bras flexible (25) et ont des sections triangulaires, dons les parois perpendiculaires font face a des directions opposées.

6. Un élément connecteur selon la Revendication 5, qui peut venir en prise avec une extrémité de bras d'essuyage (3011) qui a un grand rayon de courbure en insérant par le dessus dudit tenon (251) sur ledit bras flexible (25) dans une fente (305) disposée sur la jambe inférieure du bras d'essuyage (304), à condition que la surface circulaire intérieure (309) de l'extrémité de bras (3011) est montée de manière à entourer la surface circulaire extérieure (210) de la grande traverse (21) et que la surface inférieure (307) de la jambe supérieure (302) de l'extrémité de bras est placée sur la paroi supérieure (32).

7. Un élément connecteur selon la Revendication 5, qui peut venir en prise avec une extrémité de bras d'essuyage (3012) qui a un petit rayon de courbure en insérant par le dessous dudit tenon (252) sur ledit bras flexible (25) dans une fente (305) disposée sur la jambe inférieure du bras d'essuyage (304), à condition que la surface circulaire intérieure (309) de l'extrémité de bras (3012) est montée de manière à entourer la surface circulaire extérieure (220) de la petite traverse (22) et que la surface inférieure (307) de la jambe supérieure (302) de l'extrémité de bras est placée sur la paroi supérieure (32).

8. Un élément connecteur selon la Revendication 1, dans lequel lesdites saillies de prolongement (41) sont disposées sur la parties supérieure des parois latérales (11), au moins une sur chaque paroi (11) et disposées de manière à s'étirer vers le haut.

9. Un élément connecteur selon la Revendication 1, qui est utilisable avec une extrémité de bras (301) ayant trois ou plusieurs largeurs différentes en utilisant des saillies de prolongement (41, 42) avec plus d'une épaisseur.

10. Un élément connecteur selon la Revendication 1, dans lequel lesdites saillies de prolongement (41) comprennent un col (413) et une partie de corps (414), où le col (413) a une épaisseur de paroi plus faible pour former une zone de pellicule pour une meilleure flexion et dans la région de jonction avec les parois latérales (11), il est considérablement affaibli par des entailles (412) disposées sur ses deux côtés.

11. Un élément connecteur selon la Revendication 10, dans lequel le corps (414) de la saillie de prolongement (41) comprend un dos de section transversale rectangulaire (416), préférablement dont les coins extérieurs sont arrondis et des dents (417) qui s'étendent dudit dos (416) dans les intervalles, formant des renflements.

12. Un élément connecteur selon la Revendication 11, dans lequel les parois latérales desdites dents (417) sont pourvues des saillies de verrouillage (425) formant des renflements de section transversale triangulaire.

13. Un élément connecteur selon les Revendications 11 et 12, dans lequel lesdites dents (417) sont disposées de manière à former un renflement d'une seule pièce s'étendant dudit dos (416) vers l'intérieur.

14. Un élément connecteur selon la Revendication 1, qui comprend sur les parois latérales (11) un logement (432) disposé sous desdites saillies de prolongement (41), dans lequel les saillies de prolongement (41) sont insérées et verrouillées.

15. Un élément connecteur selon la Revendication 1, dans lequel lesdites saillies de prolongement peuvent être détachées manuellement ou avec un outil et retirées de la zone où ladite saillie de prolongement (41) est reliée à la paroi latérale (11).

16. Un élément connecteur selon les revendications de 1 à 15, qui peut être fait de matière plastique par un procédé d'injection.
